# EUROPEAN PATENT SPECIFICATION

(11) **EP 2 842 008 B1**
(45) Date of publication and mention of the grant of the patent: **03.06.2020**
(21) Application number: 13721614.9
(22) Date of filing: 22.04.2013
(51) Int. Cl.: G05B 23/02

(54) **A METHOD FOR DETERMINING A PERFORMANCE INDICATOR FOR A PROCESSING SYSTEM**
VERFAHREN ZUR BESTIMMUNG EINER LEISTUNGSANZEIGE FÜR EINE VERARBEITUNGSANLAGE
PROCÉDÉ DE DÉTERMINATION D'UN INDICATEUR DE PERFORMANCE POUR UN SYSTÈME DE TRAITEMENT

(30) Priority: 27.04.2012 SE 1250426
(43) Date of publication of application: 04.03.2015
(73) Proprietor: Tetra Laval Holdings & Finance SA, 1009 Pully (CH)
(72) Inventor: LUEDTKE, Pontus, S-246 51 Löddeköpinge (SE)
(74) Representative: Tetra Pak - Patent Attorneys SE
(86) International application number: PCT/EP2013/058266
(87) International publication number: WO 2013/160232

(56) References cited:
- WO-A1-03/058506
- US-A1- 2009 111 382

## Description

### Technical Field

The invention generally relates to the field of automation in the processing industry. More particularly, it relates to a method for determining a performance indicator, a method for detecting an inefficiency in a processing system, a method for adjusting a processing system and a control device.

### Background of the invention

Today, food processing plant owners around the world are striving to improve the performance of their equipment. One reason for this is that the price for food is increasing, making it more important to reduce the product loss. Another reason is that the demands for making sure that the food has been processed properly and is safe to consume are increasing, making it important to continuously and closely monitor the performance of the equipment in order to make sure that the food is processed in a correct manner. Moreover, during the last years there has been an increased focus on the consumption of clean water having the effect that there is a need to be able to monitor the usage of clean water and, in a next step, to be able to optimize the equipment and the line such that the usage is kept as low as possible. To sum up, most food processing plant owners today require a monitoring system such that they can continuously and closely monitor the performance of the food processing.

A problem today is how to indicate the performance of the food processing system to an operator in an accurate and flexible manner.

Some related prior art is reflected by patent documents WO03/058506A1 and US2009/111382A1.

### Summary

Accordingly, the present invention preferably seeks to mitigate, alleviate or eliminate the above mentioned problem by providing a method according to the appended claims, embodiments thereof being defined in the dependent claims.

According to another aspect it is provided a computer program comprising computer program code adapted to perform any one of aspects above when said computer program is run on a computer.

### Brief description of the drawings

The above, as well as additional objects, features and advantages of the present invention, will be better understood through the following illustrative and non-limiting detailed description of preferred embodiments of the present invention, with reference to the appended drawings, wherein:
Fig 1 generally illustrates a processing system.
Fig 2 illustrates an organization chart for a processing system.
Fig 3 illustrates a control device.
Fig 4a-c illustrates time models.
Fig 5 illustrates a flowchart for determining a performance indicator.
Fig 6 illustrates a flowchart for detecting inefficiencies in a processing system and optionally adjusting the food processing system to mitigate the inefficiencies.
Fig 7 illustrates an example of interaction between different processing system and a settings change database.

### Detailed description of preferred embodiments

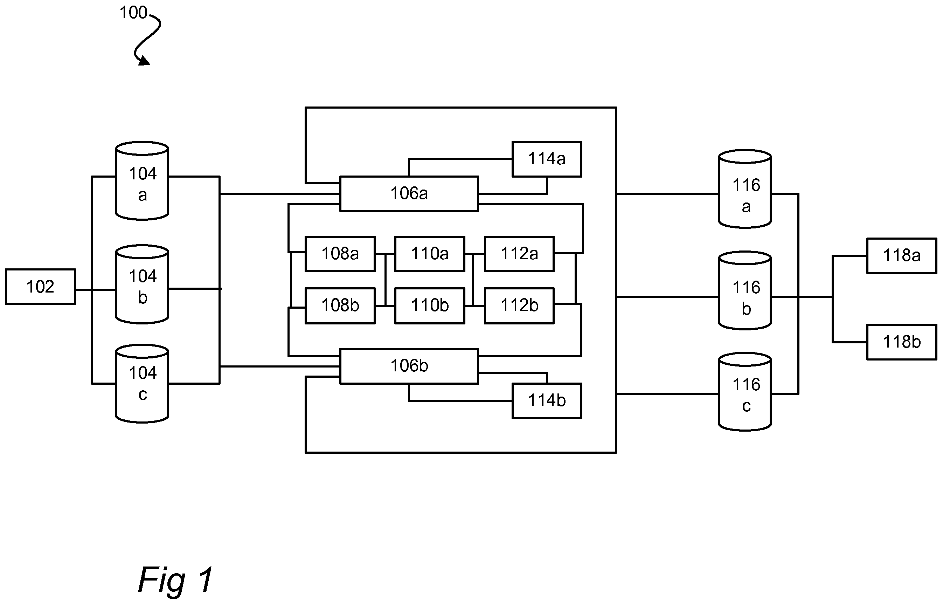

Fig 1 generally illustrates a processing system, more particularly an example presenting general processing components of a dairy processing system 100. When designing a food processing system many differents aspects need to be taken into account, e.g. level of flexibility in terms of volume, level of flexibility in terms of different products and level of redundancy. An effect of this is that many food processing systems have a unique design.

Milk is received via a milk reception station 102. Most often, at the milk reception station 102 lorries with tanks filled with milk arrive and the milk is pumped into balance tanks 104a, 104b, 104c. In this example three balance tanks 104a, 104b, 104c are used. A good reason for having more than one tank is that after the milk has been received tests are made on the milk in order to make sure that it is not unhealthy. By having more than one tank this procedure can be made without upholding the entire process if unhealthy milk is found in one of the tanks.

As illustrated in the figure, in this example, the milk may be put in any of the balance tanks 104a, 104b, 104c. Although not illustrated, this is achieved by having valves controlling the flow of the milk from the milk reception station 102 to the balance tanks 104a, 104b, 104c. The valves are in modern dairies controlled remotely by using a monitoring/controlling software.

Next, the milk held in the balance tanks 104a, 104b, 104c is transferred to a heat exchanger 106a, 106b. In this example two parallell heat exchangers are used. An advantage of this is that the process may continue even when one of the heat exchangers are down, e.g. due to cleaning or service. The heat exchangers 106a, 106b may be different kinds of heat exchangers. If only milk will be processed, plate heat exchangers may be used. If milk and products containing fibers, such as fruit juice, tubular heat exchangers may be used. Other examples of heat exchangers used within food processing are coil heat exchangers and scraped surface heat exchangers.

As can be readily understood by the skilled person feeder pumps, flow controllers, pressure valves, check valves etc are used for transferring the milk between the different machine units in a safe and reliable manner.

After having pre-heated the milk it can be transferred to a dearator 108a, 108b in which the air content in the milk is reduced in order to reach a desired level. Next, the milk can be transferred to a separator 110a, 110b in which the milk is divided into cream (high fat content) and skim milk (low fat content). After being separated, the milk is transferred to a homogenizer 112a, 112b, in which fat globules are reduced into minor pieces.

As illustrated, there may be provided pipes such that the milk may be steered in different paths. For the same reason as described above in relation to the two heat exchangers, it is beneficial to have this flexibility if one machine unit is down. Another reason is that the processing system is more flexible in terms processing alternatives. For instance, a certain product recipe may require, for instance, additional deaeration, which in turn may result in that both the deaerators 108a, 108b in parallell can be used for the same batch.

In this example, after having been homogenized the milk is transferred to the heat exchanger 106a, 106b again for being heat treated such that unwanted microorganisms are killed. In order to reduce fouling in the heat exchangers 106a, 106b the milk can be transferred to a holding tube 114a, 114b in which the milk is kept at a certain period of time at a certain temperature, depending for instance on the protein content of the product and the heat exchanger design, such that the protein denaturates.

After the holding tube 114a, 114b, the milk can be transferred to the heat exchanger 106a, 106b once again, but this time to be cooled down. By using the same heat exchanger for both heating the incoming milk and cooling the outgoing milk, energy can be transferred between these two with the positive effect that a more energy efficient heat exchanger is achieved. Often heat exchangers built to work in this way are referred to as regenerative heat exchangers.

Next, the milk can be transferred to intermediate storage tanks 116a, 116b, 116c in which the milk is stored before the milk is packed in filling machines 118a, 118b. As illustrated, the processing system may be designed such that the milk can be steered from any of the heat exchangers 106a, 106b to any of the intermediate storage tanks 116a, 116b, 116c. A reason for having this flexiblity is to be able to continue even though one of the intermediate storage tanks is down.

Though not illustrated, after the milk has been put in packages, the packages may be bundled in mulitpacks, loaded on pallets and then sent to a storage before being transported to food stores.

As can be understood by this example, there may be a number of different paths the milk way find its way through the processing system. Most often these paths are referred to as lines or processing lines. Each of the different lines will comprise a different set-up of machine units.

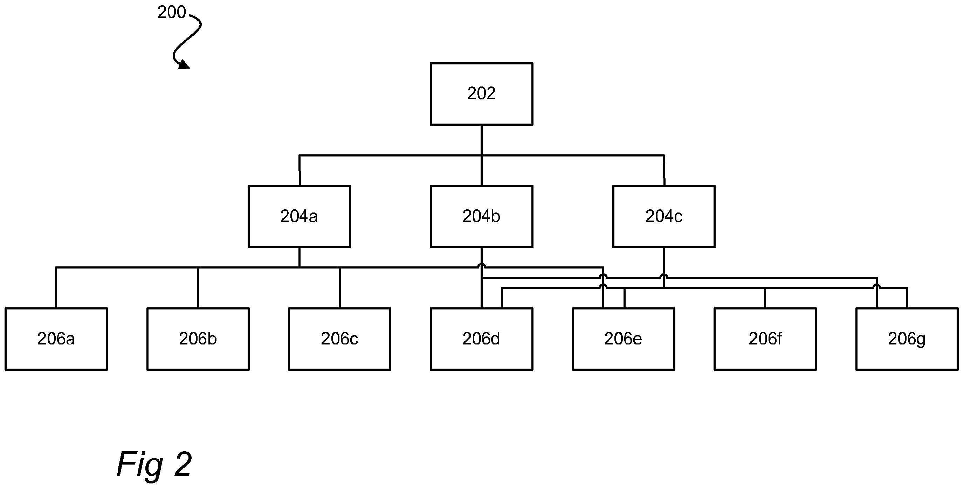

In order to organize a processing plant an organization chart 200 may be used as illustrated by an example in fig 2. When considering all equipment used in the processing plant for processing food or the like, one may refer to a processing system 202. In turn, the processing system 202 may comprise a number of different lines 204a, 204b, 204c. For instance, the processing system 202 may be built as a flexible processing system that can process both nectar, or other beverage not comprising fibers, or juice, or other beverage comprising fibers. When processing nectar a first line adapted for beverage without fibers may be used and when processing juice a second line adapted for beverage with fibers may be used.

The lines 204a, 204b, 204c comprise machine units 206a, 206b, 206c, 206d, 206e, 206f, 206g. As illustrated in fig 2 by way of example, one and the same machine unit may be part of several lines. For instance, one and the same packaging machine may be used for both packaging nectar processed by the first line referred to above and juice processed by the second line also referred to above.

In order to keep track of the performance of the processing plant so-called performance indicators are used. An example of a performance indicator is "Line CIP Index" (CIP - Cleaning In Place) measuring the ratio between cleaning time and operation time for a specific line. Another example is "Unit Electricity per Litre" measuring electricity consumption per produced amount (litres) for a specific unit. Still an example is "System Chemicial Consumption" measuring chemical consumption per produced amount for the processing system as a whole.

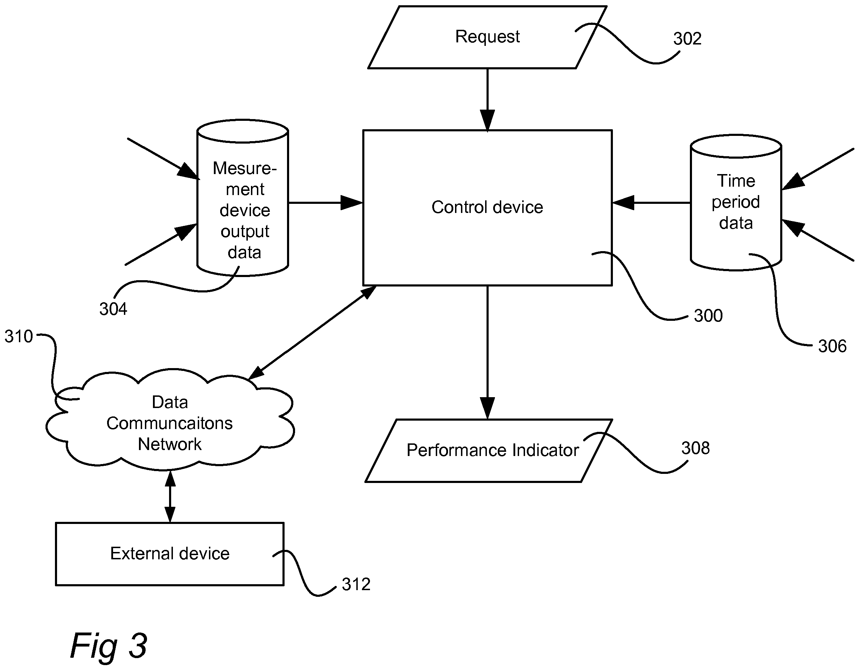

Referring to figure 3, in order to calculate such a performance indicator a control device 300 can be used. The control device 300 may be any type of computer, microcontroller or the like capable processing data.

The control device 300 is configured to receive a request 302 for a performance indicator 308. The request 302 can provide information for which level that the performance should be determined. In this particular example, system, line or unit level. Further, the request 302 can provide information on which data to be used for determining the performance indicator, herein referred to as measurement device output (MDO) data 304. The MDO data 304 may be held in a database as illustrated, but it can also be held in any other memory that can communicate with the control device 300. With reference to the examples given above, the MDO data 304 may be the time used for cleaning the line, electricty consumption for a specific machine unit or chemicals used by the processing system. As can be readily understood, the MDO data 304 may contain any kind of data relevant for determing performance.

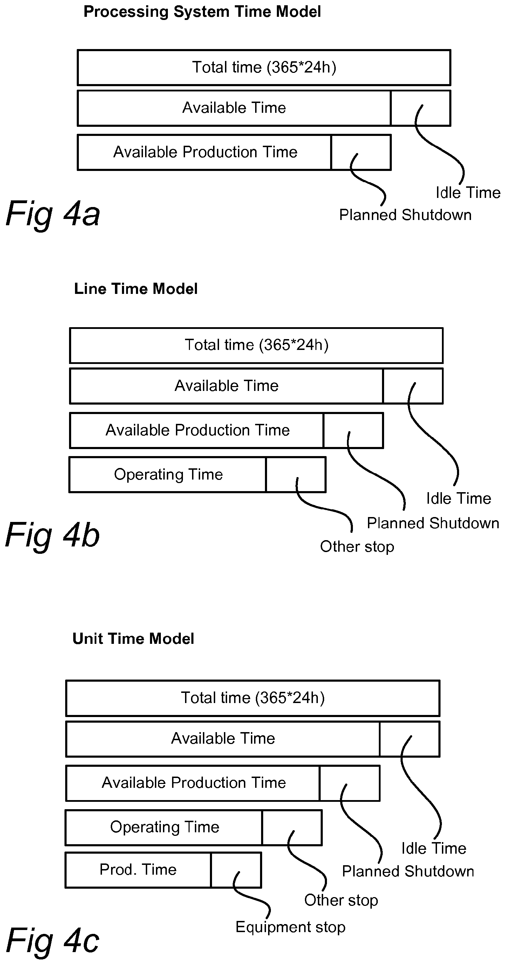

Apart from the above mentioned, the request 302 can also provide information on which time period that should be used for determining the performance indicator 308. This will be further described in connection to fig 4a-4c. Based on which time period that should be used, time period data 306 may be received by the control device 300.

Further, the request 302 can provide information on how to calculate the performance indicator 308 based on the MDO data 304 and the time period data 306. This information may be stored in the control device 300 as software code, but how to calculate may also be provided in terms of an identification making it possible to send received MDO data and time period data together with the identification via a data communications network 310 to an external device 312 that does the actual calculation and sends a result back to the control device 300. An advantage of having this approach is that if a way how to calculate a performance indicator is changed there is no need to reprogram control devices spread to different sites around the world.

Most often performance indicators are related to time in some way. In order to make sure that reliable performance indicators are determined it is necessary to make sure that a correct time period is considered.

For instance, if determining the performance indicator "Unit Electricity per Litre" for a heat exchanger a time period when the heat exchanger actually has been used for processing should be taken into account, and not for instance when the processing system as a whole has been used for processing since the processing system may comprise several processing lines and the heat exchanger might only be part of one of them.

In order to make sure that the correct time is used a time model has been made. The time model comprises three main parts -processing system time model, line time model and unit time model.

As illustrated in fig 4a, the processing system time model can be divided in three parts - total time, available time and available production time.

Total time should be understood to include hours in a time period, e.g. a year.

Available time should be understood to include all hours the processing system is available for operation, e.g. national holidays and weekend may be excluded if the processing system is not open for operation during these days, also referred to as idle time.

Available production time shoud be understood to include all available time except for when there is planned shutdown, e.g. due to rebuilding or installation of new machinery or due to that no production is planned.

Fig 4b illustrates the line time model. The line time model comprises total time, available time and available production time as the processing system time model. Further, the line time model comprises operating time.

Operating time should be understood to include available production time except for other stops. Other stops should be understood to be line specific stops, e.g. a processing system comprising several lines may continue to produce even though one of the lines are down.

Fig 4c illustrates the unit time model. The unit time model comprises total time, available time, available production time and operating time as the line time model. Further, the unit time model comprises production time.

Production time should be understood to be operating time except for equipment stops. Equipment stops should be understood stops caused by the unit itself, also referred to as machine unit specific stops.

The wording time period used could be understood as one or a number of time slots during which the processing system, the processing line and/or the machine unit are in a certain state.

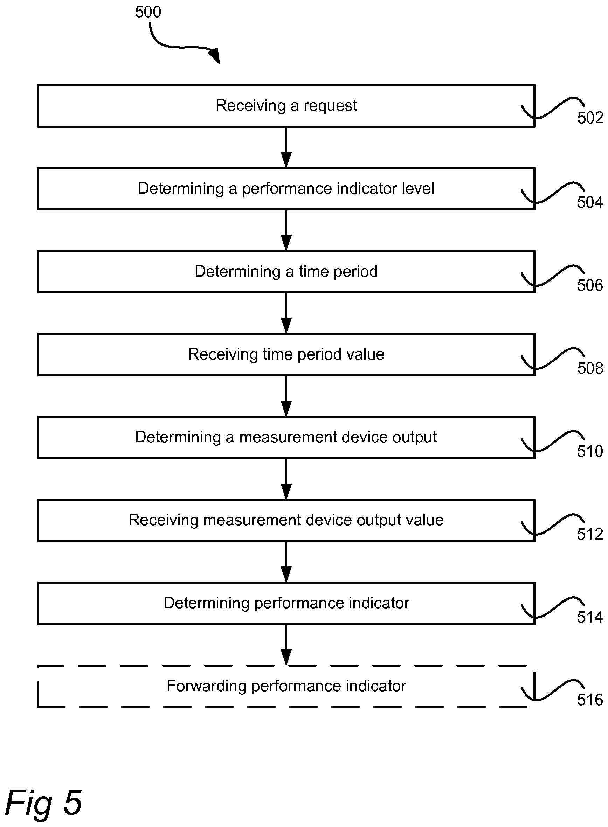

Referring to fig 5, by having a processing system divided in lines and machine units as suggested above and by having time periods as suggested above, a method 500 for determining a performance indicator performed in a control device may be implemented.

A first step 502 may be to receive a request for determining a performance indicator. In the request the time period and MDO data to be used may be specified or, alternatively, the performance indicator may be used as an ID for retrieving this information from a memory or a database.

In a subsequent step 504, when having the request, a performance indicator level can be determined. Which level to choose may be part of the request or, alternatively, the performance indicator may be used to retrieve the information. How many levels may vary depending on the complexity of the processing system, but for a food processing system the three levels presented above - processing system, line or machine unit level - may be used.

In a step 506, it is decided which time period to use. Also this information may be included in the request or, alternatively, may be retrieved from elsewhere, e.g. an external database, when knowing the performance indicator to be determined.

In a step 508, when knowing which time period to use, relevant time period data may be retrieved from e.g. a time period database. The time period database may be configured to continuously update by retrieving information from the different machine units and/or the lines. More particularly, information on changes from one time period to another may be sent to the time period database.

In a step 510, it is decided which MDO to use. This information may be included in the request or can be retrieved from an external database when knowing which performance indicator to determine. This step may be performed either before or in parallel with the steps 506 and/or 508.

In a step 512, when knowing the MDO to use, relevant MDO values are retrived from e.g. a MDO database. As the time period database, the MDO database may be continuously updated by retrieving data from measurement devices placed in the lines and/or in the machine units. In order to retrieve relevant MDO values points in time may be used to link the MDO values to the time period.

In a step 514, when having the time period value and the MDO value, the performance indicator is determined. The actual processing may be performed in a control device connected to the processing system, or alternatively, if the processing requires significant processing power or if the actual calculation should be kept secret, the actual processing may be made by an external processing device.

Optionally, when having determined the performance indicator, this may be forwarded to an external device, such as a server belonging to the company that has supplied the processing system in order to keep track of the performance of the processing system, the lines and the machine units.

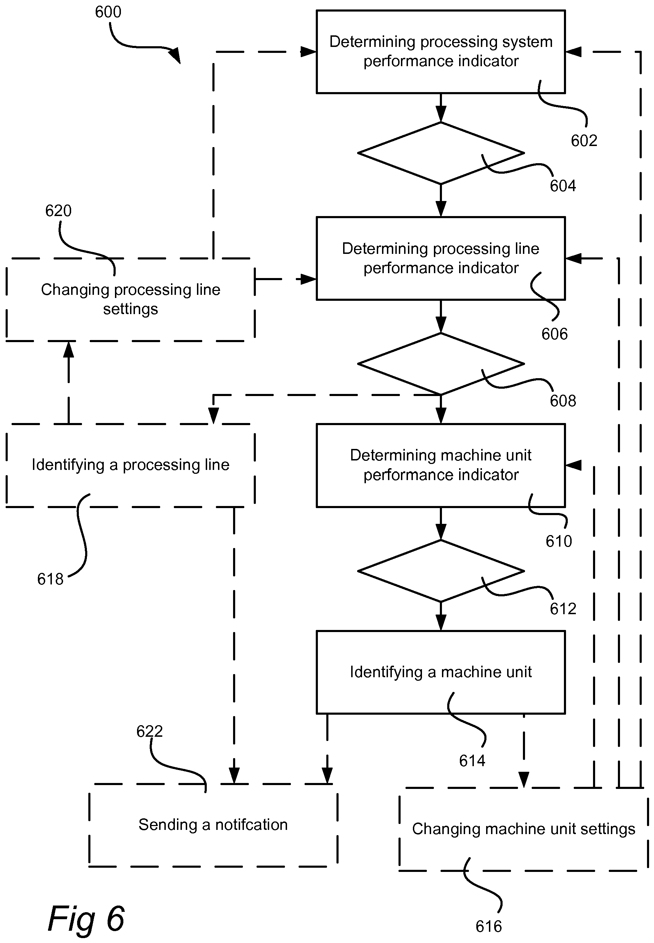

In fig 6 it is illustrated by a flowchart 600 how performance indicators may be used to improve the performance of the processing system.

In a step 602 a processing system performance indicator is determined, i.e. a performance indicator taking the whole processing system into account.

If, in step 604, after having compared the processing system performance indicator with a processing system reference value it is decided that the processing system performance is not as good as could be expected, a processing line performance indicator is determined in step 606. If it cannot be decided which processing line that affects the processing system performance negatively processing line performance indicators may be determined for more than one of the processing lines. Further, links between processing system performance indicators and processing line performance indicators may be used in order to know which processing line performance indicators to determine if a certain processing system performance indicator is not as good as could have been expected.

Similarly, in step 608, if the processing line performance indicator is not as good as could have been expected, e.g. this can be achieved by comparing the processing line performance indicator with a processing line reference value, a machine unit performance indicator is determined in step 610. If it cannot be decided which machine unit that affects the processing line performance indicator negatively, more than one machine unit performance indicator may be determined. Further, links between processing line performance indicators and machine unit performance indicators may be used in order to know which machine unit performance indicators to determine if a certain processing line performance indicator is not as good as could have been expected.

In step 612, by comparing the machine unit performance indicator with a machine unit reference value it can be determined if the machine unit performance indicator is according to expectations or not. If the machine unit performance indicator is not according to expectations, a machine unit can be identified in step 614.

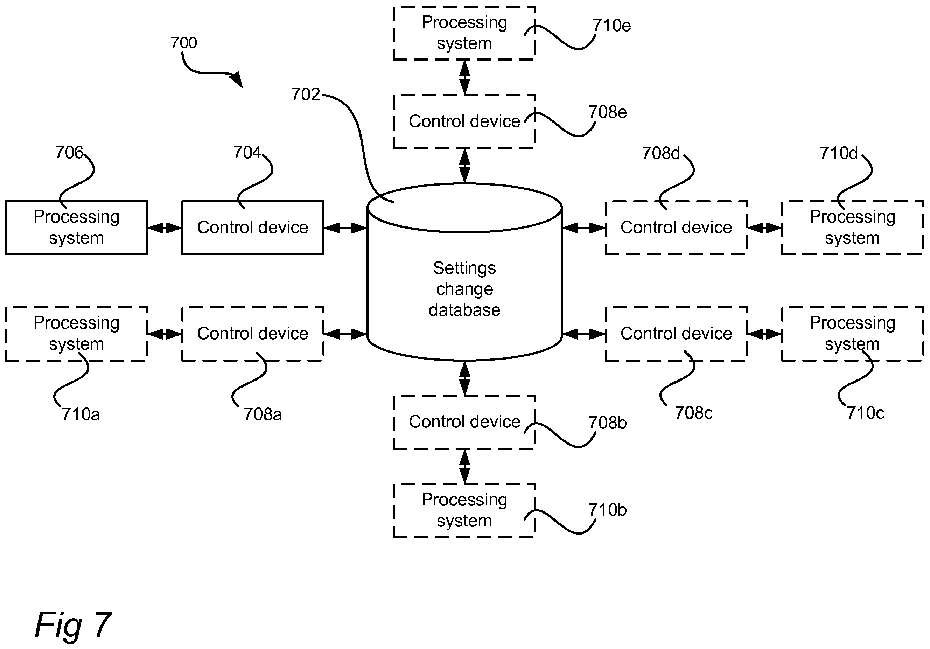

Optionally, when having identified the machine unit not performing according to expectations, machine settings for this machine unit can be changed. In order to know how to change the machine settings a settings change database illustrated in fig 7 may be used.

After having changed the machine settings a processing system performance indicator may be determined again in step 602. In this way an iterative system is formed making it possible to incrementally improve the performance of the processing system. The settings changes and the performance indicators determined may be logged in order to be able to compare with other processing systems.

If not considered necessary to again detemine the processing system performance indicator, e.g. if only one of the lines have not been according to expectations, a processing line performance indicator may be determined again after having changed the machine settings.

Further, if not considered necessary to again determine the processing line performance indicator, e.g. if only one machine unit did not perform according to expectations, a machine unit performance indicator may be determined again after having changed the machine settings.

Similarly, in step 608, if it is determined that the processing line performance indicator is not according to expectations, a processing line can be identified in step 618.

When the processing line has been identified processing line settings for this processing line can be changed in step 620. After having changed the processing line settings a processing system performance indicator may determined again or, e.g. if only one of the processing line did not perform according to expectations, a processing line performance indicator may be determined again.

In step 622, when having identified the machine unit or the processing line not performing according to expectations a notification can be sent, e.g. via the controlling/monitoring software.

Further, a notification can also be sent as a pre-warning if a trend that a certain performance indicator will soon not fulfill expectations can be detected.

Referring to fig 7, in order to be able to amend the processing line settings and/or machine unit settings in a way that will improve the performance of the processing system experiences from other processing system may be used.

In order to share the experiences a network 700 between different processing systems may be formed. In the example illustrated six different processing systems can share experiences via a settings change database 702 that can contain both processing line settings and/or machine unit settings. Further, it may also contain information on successful and not successful changes made as a response to a certain performance indicator not fulfilling expectations, both in terms of which setting to change and in terms of how much to change.

More specifically, a processing system 706 having a control device 704 may communicate with the settings change database 702. On one hand the control device 704 communicate with the settings change database 702 in order to add information to the database so that this information is available for other control devices 708a, 708b, 708c, 708d, 708e, in turn connected to processing systems 710a, 710b, 710c, 710d, 710e, in order for these to have this information when deciding which settings to change in order to improve the performance of the processing system, more particularly change settings such that a performance indicator not fulfilling expectations will do so. On the other hand, the control device 706 uses the information in the settings change database 702 to make better decisions on which setting to change and/or how much.

The information in the settings change database 702 may be stored in a number of different ways, but generally there can be links between performance indicators and settings in order to know which settings to change when performance indicators are not fulfilling expectations. Further, if a number of settings should be changed the order in which the settings should be changed can be provided as well. Since the processing system may need to adapt between the different changes time periods between the changes may be provided as well.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for detecting an inefficiency in a processing system (100, 202), said processing system (100, 202) being divided in a number of processing lines (204a, 204b, 204c), referred to as a first sub-level, said processing lines being in turn divided in a plurality of machine units (206a, 206b, 206c, 206d, 206e, 206f, 206g), referred to as a second sub-level, said method comprising
determining a processing system (100, 202) performance indicator for said processing system (100, 202) by
- Receiving (502) by a control device (300) of the processing system a request (302) for a performance indicator for the processing system,
- determining (504) based on the information comprised in the request (302) a performance indicator level by determining if said performance indicator is associated with said processing system,
- determining (506) based on the information comprised in the request (302) a time period related to said performance indicator level,
- receiving (508) a time period value related to said time period,
- determining (510) based on the information comprised in the request (302) a measurement device output related to said performance indicator,
- receiving (512) at least one measurement device output value related to said measurement device output, and
- determining (514) said performance indicator based on said measurement device output value and said time period value, if said processing system performance indicator differs from a processing system reference value, determining (606) a processing line performance indicator for at least one of said processing lines (204a, 204b, 204c) in the processing system by
- receiving by a control device (300) of the processing system a request for a performance indicator for the at least one processing line,
- determining a performance indicator level by determining if said performance indicator is associated with one of said processing lines in said first sub-level,
- determining a time period related to said performance indicator level,
- receiving a time period value related to said time period,
- determining a measurement device output related to said performance indicator,
- receiving at least one measurement device output value related to said measurement device output, and
- determining said performance indicator based on said measurement device output value and said time period value,
if said processing line performance indicator differs from a processing line reference value, determining (610) a machine unit performance indicator for at least one of said machine units in said processing line,
if said machine unit performance indicator differs from a machine unit reference value, identifying (614) a machine unit related to said machine unit performance indicator.

2. The method according to claim 1, wherein the time period related to the performance indicator associated to the processing system (100, 202) is one of three time periods being total time, being all hours within a certain time period, available time, being all hours within a certain time period except idle time, and available production time, being available time except planned shutdown.

3. The method according to any of the preceding claims, wherein the time period related to the performance indicator associated to the processing lines (204a, 204b, 204c) is one of four time periods, these four time periods being
total time, being all hours within a certain time period,
available time, being all hours within a certain time period except idle time,
available production time, being available time except planned shutdown, and
operating time, being available production time except for line specific stops.

4. The method according to any of the preceding claims, wherein the time period related to the performance indicator associated to the machine units (206a, 206b, 206c, 206d, 206e, 206f, 206g) is one of five time periods, these five time periods being
total time, being all hours within a certain time period,
available time, being all hours within a certain time period except idle time,
available production time, being available time except planned shutdown,
operating time, being available production time except for line specific stops, and
production time, being operating time except machine unit specific stops.

5. The method according to any of the preceding claims, further comprising
Forwarding (516) said performance indicator to an external device (312).

6. The method according to any of the preceding claims, further comprising
sending a notification that an inefficiency has been detected for said machine unit (206a, 206b, 206c, 206d, 206e, 206f, 206g).

7. The method according to any of the preceding claims, further comprising
identifying a processing line related to said processing line performance indicator that differs from a processing line reference value.

8. A method for adjusting a processing system (100, 202), said method comprising
detecting an inefficiency in said processing system (100, 202) according to any one of claims 1 to 7, and
changing (616) at least one setting for said machine unit (206a, 206b, 206c, 206d, 206e, 206f, 206g) being identified to be related to said machine unit performance indicator that differs from said machine unit reference value.

9. The method according to claim 8, further comprising after said step of changing (616), determining an updated machine unit (206a, 206b, 206c, 206d, 206e, 206f, 206g) performance indicator by
- receiving (502) by a control device (300) of the processing system (100, 202) a request (302) for a performance indicator for the updated machine unit,
- determining (504) based on the information comprised in the request (302) a performance indicator level by determining if said performance indicator is associated with said machine unit in said second sub-level,
- determining (506) based on the information comprised in the request (302) a time period related to said performance indicator level,
- receiving (508) a time period value related to said time period,
- determining (510) based on the information comprised in the request (302) a measurement device output related to said performance indicator,
- receiving (512) at least one measurement device output value related to said measurement device output, and
- determining (514) said performance indicator based on said measurement device output value and said time period value.
determining if said updated machine unit performance indicator differs from said machine unit performance indicator,
if said updated machine unit performance indicator differs from said machine unit performance indicator, changing again at least one setting for said machine unit.

10. The method according to claim 9, further comprising
transferring at least said machine unit (206a, 206b, 206c, 206d, 206e, 206f, 206g) performance indicator to a reference database,
receiving information on which setting that should be changed and to what said setting should be changed.

11. A computer program comprising computer program code adapted to perform the one or more steps of the method according to any one of claims 1 to 10 when said computer program is run on a computer.

## Patentansprüche

1. Verfahren zum Erfassen einer Ineffizienz in einem Verarbeitungssystem (100, 202), wobei das Verarbeitungssystem (100, 202) in eine Anzahl von Verarbeitungslinien (204a, 204b, 204c) unterteilt ist, die als eine erste Unterebene bezeichnet wird, wobei die Verarbeitungslinien wiederum in eine Mehrzahl von Maschineneinheiten (206a, 206b, 206c, 206d, 206e, 206f, 206g) unterteilt sind, die als eine zweite Unterebene bezeichnet wird, wobei das Verfahren umfasst
das Bestimmen einer Verarbeitungssystem-(100, 202)-Leistungsanzeige für das Verarbeitungssystem (100, 202) durch
- das Empfangen (502) einer Anfrage (302) einer Leistungsanzeige für das Verarbeitungssystem durch eine Steuervorrichtung (300) des Verarbeitungssystems,
- das Bestimmen (504) einer Leistungsanzeigestufe auf Grundlage der Informationen, die in der Anfrage (302) enthalten sind, durch das Bestimmen, ob die Leistungsanzeige dem Verarbeitungssystem zugeordnet ist,
- das Bestimmen (506) einer Zeitdauer, die in Zusammenhang mit der Leistungsanzeigestufe steht, auf Grundlage der Informationen, die in der Anfrage (302) enthalten sind,
- das Empfangen (508) eines Zeitdauerwertes, der in Zusammenhang mit der Zeitdauer steht,
- das Bestimmen (510) einer Messvorrichtungsausgabe, die in Zusammenhang mit der Leistungsanzeige steht, auf Grundlage der Informationen, die in der Anfrage (302) enthalten sind,
- das Empfangen (512) mindestens eines Messvorrichtungsausgabewertes, der in Zusammenhang mit der Messvorrichtungsausgabe steht, und
- das Bestimmen (514) der Leistungsanzeige auf Grundlage des Messvorrichtungsausgabewertes und des Zeitdauerwertes,
wenn sich die Verarbeitungssystemleistungsanzeige von einem Verarbeitungssystemreferenzwert unterscheidet, das Bestimmen (606) einer Verarbeitungslinienleistungsanzeige für mindestens eine der Verarbeitungslinien (204a, 204b, 204c) in dem Verarbeitungssystem durch
- das Empfangen einer Anfrage einer Leistungsanzeige für die mindestens eine Verarbeitungslinie durch eine Steuervorrichtung (300) des Verarbeitungssystems,
- das Bestimmen einer Leistungsanzeigestufe durch das Bestimmen, ob die Leistungsanzeige einer der Verarbeitungslinien in der ersten Unterebene zugeordnet ist,
- das Bestimmen einer Zeitdauer, die in Zusammenhang mit der Leistungsanzeigestufe steht,
- das Empfangen eines Zeitdauerwertes, der in Zusammenhang mit der Zeitdauer steht,
- das Bestimmen einer Messvorrichtungsausgabe, die in Zusammenhang mit der Leistungsanzeige steht,
- das Empfangen mindestens eines Messvorrichtungsausgabewertes, der in Zusammenhang mit der Messvorrichtungsausgabe steht, und
- das Bestimmen der Leistungsanzeige auf Grundlage des Messvorrichtungsausgabewertes und des Zeitdauerwertes,
wenn sich die Verarbeitungslinienleistungsanzeige von einem Verarbeitungslinienreferenzwert unterscheidet, das Bestimmen (610) einer Maschineneinheitleistungsanzeige für mindestens eine der Maschineneinheiten in der Verarbeitungslinie,
wenn sich die Maschineneinheitleistungsanzeige von einem Maschineneinheitreferenzwert unterscheidet, das Identifizieren (614) einer Maschineneinheit, die in Zusammenhang mit der Maschineneinheitleistungsanzeige steht.

2. Verfahren nach Anspruch 1, wobei die Zeitdauer, die in Zusammenhang mit der Leistungsanzeige steht, die dem Verarbeitungssystem (100, 202) zugeordnet ist, eine von drei Zeitdauern ist, wobei diese sind
Gesamtzeit, welche alle Stunden innerhalb einer bestimmten Zeitdauer sind,
verfügbare Zeit, welche alle Stunden innerhalb einer bestimmten Zeitdauer mit Ausnahme von Leerlaufzeit sind, und
verfügbare Produktionszeit, welche verfügbare Zeit mit Ausnahme geplanter Abschaltung ist.

3. Verfahren nach einem der vorhergehenden Ansprüche, wobei die Zeitdauer, die in Zusammenhang mit der Leistungsanzeige steht, die den Verarbeitungslinien (204a, 204b, 204c) zugeordnet ist, eine von vier Zeitdauern ist, wobei diese vier Zeitdauern sind
Gesamtzeit, welche alle Stunden innerhalb einer bestimmten Zeitdauer sind,
verfügbare Zeit, welche alle Stunden innerhalb einer bestimmten Zeitdauer mit Ausnahme von Leerlaufzeit sind,
verfügbare Produktionszeit, welche verfügbare Zeit mit Ausnahme geplanter Abschaltung ist, und
Betriebszeit, welche verfügbare Produktionszeit mit Ausnahme von linienspezifischen Stopps ist.

4. Verfahren nach einem der vorhergehenden Ansprüche, wobei die Zeitdauer, die in Zusammenhang mit der Leistungsanzeige steht, die den Maschineneinheiten (206a, 206b, 206c, 206d, 206e, 206f, 206g) zugeordnet ist, eine von fünf Zeitdauern ist, wobei diese fünf Zeitdauern sind
Gesamtzeit, welche alle Stunden innerhalb einer bestimmten Zeitdauer sind,
verfügbare Zeit, welche alle Stunden innerhalb einer bestimmten Zeitdauer mit Ausnahme von Leerlaufzeit sind,
verfügbare Produktionszeit, welche verfügbare Zeit mit Ausnahme geplanter Abschaltung ist,
Betriebszeit, welche verfügbare Produktionszeit mit Ausnahme von linienspezifischen Stopps ist, und
Produktionszeit, welche Betriebszeit mit Ausnahme von maschineneinheitspezifischen Stopps ist.

5. Verfahren nach einem der vorhergehenden Ansprüche, das ferner umfasst
das Weiterleiten (516) der Leistungsanzeige an eine externe Vorrichtung (312).

6. Verfahren nach einem der vorhergehenden Ansprüche, das ferner umfasst
das Senden einer Benachrichtigung, dass eine Ineffizienz für die Maschineneinheit (206a, 206b, 206c, 206d, 206e, 206f, 206g) erfasst wurde.

7. Verfahren nach einem der vorhergehenden Ansprüche, das ferner umfasst
das Identifizieren einer Verarbeitungslinie, die in Zusammenhang mit der Verarbeitungslinienleistungsanzeige steht, die sich von einem Verarbeitungslinienreferenzwert unterscheidet.

8. Verfahren zum Einstellen eines Verarbeitungssystems (100, 202), wobei das Verfahren umfasst
das Erfassen einer Ineffizienz in dem Verarbeitungssystem (100, 202) nach einem der Ansprüche 1 bis 7 und
das Ändern (616) mindestens einer Einstellung für die Maschineneinheit (206a, 206b, 206c, 206d, 206e, 206f, 206g), die identifiziert ist, in Zusammenhang mit der Maschineneinheitleistungsanzeige zu stehen, die sich von dem Maschineneinheitreferenzwert unterscheidet.

9. Verfahren nach Anspruch 8, das ferner umfasst
nach dem Schritt des Änderns (616) das Bestimmen einer Leistungsanzeige einer aktualisierten Maschineneinheit (206a, 206b, 206c, 206d, 206e, 206f, 206g) durch
- das Empfangen (502) einer Anfrage (302) einer Leistungsanzeige für die aktualisierte Maschineneinheit durch eine Steuervorrichtung (300) des Verarbeitungssystems (100, 202),
- das Bestimmen (504) einer Leistungsanzeigestufe auf Grundlage der Informationen, die in der Anfrage (302) enthalten sind, durch das Bestimmen, ob die Leistungsanzeige der Maschineneinheit in der zweiten Unterebene zugeordnet ist,
- das Bestimmen (506) einer Zeitdauer, die in Zusammenhang mit der Leistungsanzeigestufe steht, auf Grundlage der Informationen, die in der Anfrage (302) enthalten sind,
- das Empfangen (508) eines Zeitdauerwertes, der in Zusammenhang mit der Zeitdauer steht,
- das Bestimmen (510) einer Messvorrichtungsausgabe, die in Zusammenhang mit der Leistungsanzeige steht, auf Grundlage der Informationen, die in der Anfrage (302) enthalten sind,
- das Empfangen (512) mindestens eines Messvorrichtungsausgabewertes, der in Zusammenhang mit der Messvorrichtungsausgabe steht, und
- das Bestimmen (514) der Leistungsanzeige auf Grundlage des Messvorrichtungsausgabewertes und des Zeitdauerwertes,
das Bestimmen, ob sich die aktualisierte Maschineneinheitleistungsanzeige von der Maschineneinheitleistungsanzeige unterscheidet,
wenn sich die aktualisierte Maschineneinheitleistungsanzeige von der Maschineneinheitleistungsanzeige unterscheidet, das erneute Ändern mindestens einer Einstellung für die Maschineneinheit.

10. Verfahren nach Anspruch 9, das ferner umfasst
das Übertragen mindestens der Leistungsanzeige der Maschineneinheit (206a, 206b, 206c, 206d, 206e, 206f, 206g) an eine Referenzdatenbank,
das Empfangen von Informationen darüber, welche Einstellung geändert werden sollte und wie die Einstellung geändert werden sollte.

11. Computerprogramm, das Computerprogrammcode aufweist, der dafür ausgebildet ist, den einen oder die mehreren Schritte des Verfahrens nach einem der Ansprüche 1 bis 10 durchzuführen, wenn das Computerprogramm auf einem Computer ausgeführt wird.

## Revendications

1. Procédé de détection d'une inefficacité dans un système de traitement (100, 202), ledit système de traitement (100, 202) étant divisé en un nombre de lignes de traitement (204a, 204b, 204c), appelées premier sous-niveau, lesdites lignes de traitement étant à leur tour divisées en une pluralité d'unités machine (206a, 206b, 206c, 206d, 206e, 206f, 206g), appelées second sous-niveau, ledit procédé comprenant
la détermination d'un indicateur de performance de système de traitement (100, 202) dudit système de traitement (100, 202) en
- recevant (502) au niveau d'un dispositif de commande (300) du système de traitement une demande (302) d'indicateur de performance du système de traitement,
- déterminant (504) sur la base des informations comprises dans la demande (302) un niveau d'indicateur de performance en déterminant que ledit indicateur de performance est associé ou non audit système de traitement,
- déterminant (506) sur la base des informations comprises dans la demande (302) une période de temps liée audit niveau d'indicateur de performance,
- recevant (508) une période de temps liée à ladite période de temps,
- déterminant (510) sur la base des informations comprises dans la demande (302) une sortie de dispositif de mesure liée audit indicateur de performance,
- recevant (512) d'au moins une valeur de sortie de dispositif de mesure liée à ladite sortie de dispositif de mesure, et
- déterminant (514) ledit indicateur de performance sur la base de ladite valeur de sortie de dispositif de mesure et de ladite valeur de période de temps, si ledit indicateur de performance de système de traitement diffère d'une valeur de référence de système de traitement, la détermination (606) d'un indicateur de performance de ligne de traitement pour au moins une desdites lignes de traitement (204a, 204b, 204c) dans le système de traitement en
- recevant au niveau d'un dispositif de commande (300) du système de traitement une demande d'indicateur de performance de l'au moins une ligne de performance,
- déterminant un niveau d'indicateur de performance en déterminant que ledit indicateur de performance est associé ou non à une desdites lignes de traitement dans ledit premier sous-niveau
- déterminant une période de temps liée audit niveau d'indicateur de performance,
- recevant une valeur de période de temps liée à ladite période de temps,
- déterminant une sortie de dispositif de mesure liée audit indicateur de performance,
- recevant au moins une valeur de sortie de dispositif de mesure liée à ladite sortie de dispositif de mesure, et
- déterminant ledit indicateur de performance sur la base de ladite valeur de sortie de dispositif de mesure et de ladite valeur de période de temps,
si ledit indicateur de performance de ligne de traitement diffère d'une valeur de référence de ligne de traitement, la détermination (610) d'un indicateur de performance d'unité machine pour au moins une desdites unités machine dans ladite ligne de traitement,
si ledit indicateur de performance d'unité machine diffère d'une valeur de référence d'unité machine, l'identification (614) d'une unité machine liée audit indicateur de performance d'unité machine.

2. Procédé selon la revendication 1, dans lequel la période de temps liée à l'indicateur de performance associé au système de traitement (100, 202) est une de trois périodes de temps, étant
un temps total, à savoir toutes les heures comprises dans une certaine période de temps,
un temps disponible, à savoir toutes les heures comprises dans une certaine période de temps hormis un temps d'inactivité, et
un temps de production disponible, à savoir un temps disponible hormis un arrêt prévu.

3. Procédé selon l'une quelconque des revendications précédentes, dans lequel la période de temps liée à l'indicateur de performance associé aux lignes de traitement (204a, 204b, 204c) est une de quatre périodes de temps, ces quatre périodes de temps étant
un temps total, à savoir toutes les heures comprises dans une certaine période de temps,
un temps disponible, à savoir toutes les heures comprises dans une certaine période de temps hormis un temps d'inactivité,
un temps de production disponible, à savoir un temps disponible hormis un arrêt prévu, et
un temps de fonctionnement, à savoir un temps de production disponible hormis des arrêts spécifiques de lignes.

4. Procédé selon l'une quelconque des revendications précédentes, dans lequel la période de temps liée à l'indicateur de performance associé aux unité machines (206a, 206b, 206c, 206d, 206e, 206f, 206g) est une de cinq périodes de temps, ces cinq périodes de temps étant
un temps total, à savoir toutes les heures comprises dans une certaine période de temps,
un temps disponible, à savoir toutes les heures comprises dans une certaine période de temps hormis un temps d'inactivité,
un temps de production disponible, à savoir un temps disponible hormis un arrêt prévu,
un temps de fonctionnement, à savoir un temps de production disponible hormis des arrêts spécifiques de lignes, et
un temps de production, à savoir un temps de fonctionnement hormis des arrêts spécifiques d'unités machine.

5. Procédé selon l'une quelconque des revendications précédentes, comprenant en outre
la transmission (516) dudit indicateur de performance à un dispositif externe (312).

6. Procédé selon l'une quelconque des revendications précédentes, comprenant en outre
l'envoi d'une notification qu'une inefficacité a été détectée pour ladite unité machine (206a, 206b, 206c, 206d, 206e, 206f, 206g).

7. Procédé selon l'une quelconque des revendications précédentes, comprenant en outre
l'identification d'une ligne de traitement liée audit indicateur de performance de ligne de traitement qui diffère d'une valeur de référence de ligne de traitement.

8. Procédé de réglage d'un système de traitement (100, 202), ledit procédé comprenant
la détection d'une inefficacité dans ledit système de traitement (100, 202) selon l'une quelconque des revendications 1 à 7, et
le changement (616) d'au moins un réglage de ladite unité machine (206a, 206b, 206c, 206d, 206e, 206f, 206g) identifiée comme étant liée audit indicateur de performance d'unité machine qui diffère de ladite valeur de référence d'unité machine.

9. Procédé selon la revendication 8, comprenant en outre après ladite étape de changement (616), la détermination d'un indicateur de performance d'unité machine actualisée (206a, 206b, 206c, 206d, 206e, 206f, 206g) en
- recevant (502) au niveau d'un dispositif de commande (300) du système de traitement (100, 202) une demande (302) d'indicateur de performance pour l'unité de machine actualisée,
- déterminant (504) sur la base des informations comprises dans la demande (302) un niveau d'indicateur de performance en déterminant que ledit indicateur de performance est associé ou non à ladite unité machine dans ledit second sous-niveau,
- déterminant (506) sur la base des informations comprises dans la demande (302) une période de temps liée audit niveau d'indicateur de performance
- recevant (508) une valeur de période de temps liée à ladite période de temps,
- déterminant (510) sur la base des informations comprises dans la demande (302) une sortie de dispositif de mesure liée audit indicateur de performance,
- recevant (512) au moins une valeur de sortie de dispositif de mesure liée à ladite sortie de dispositif de mesure, et
- déterminant (514) ledit indicateur de performance sur la base de ladite valeur de sortie de dispositif de mesure et ladite valeur de période de temps,
la détermination que ledit indicateur de performance d'unité machine actualisée diffère ou non dudit indicateur de performance d'unité machine,
si ledit indicateur de performance d'unité machine actualise diffère dudit indicateur de performance d'unité machine, le changement à nouveau d'au moins un réglage de ladite unité machine.

10. Procédé selon la revendication 9, comprenant en outre
le transfert d'au moins ledit indicateur de performance d'unité machine (206a, 206b, 206c, 206d, 206e, 206f, 206g) à une base de données de référence,
la réception d'informations sur le réglage qui est à changer et sur la nouvelle valeur dudit réglage.

11. Programme informatique comprenant un code de programme informatique adapté pour mettre en œuvre les une ou plusieurs étapes du procédé selon l'une quelconque des revendications 1 à 10 quand ledit programme informatique est exécuté sur un ordinateur.
